# EUROPEAN PATENT APPLICATION

(11) **EP 4 832 613 A1**
(43) Date of publication of application: **28.10.2026**
(21) Application number: 25747664.8
(22) Date of filing: 21.01.2025
(51) Int. Cl.: H04W 72/0446

(54) **COMMUNICATION METHOD, APPARATUS AND SYSTEM**

(30) Priority: 31.01.2024 CN 202410144607
(71) Applicant: Huawei Technologies Co., Ltd., Shenzhen, Guangdong 518129 (CN)
(72) Inventor: XU, Jiaojiao, Shenzhen, Guangdong 518129 (CN); SU, Hongjia, Shenzhen, Guangdong 518129 (CN); ZHANG, Yi, Shenzhen, Guangdong 518129 (CN); QI, Hong, Shenzhen, Guangdong 518129 (CN)
(74) Representative: Huawei European IPR
(86) International application number: PCT/CN2025/073750
(87) International publication number: WO 2025/162092

(57) **Abstract**

This application provides a communication method, apparatus, and system. The communication method can be applied to a communication and/or sensing field. For example, in the method, a transmitting device generates a first chirp signal, where the first chirp signal includes N sub-chirp signals, N is a positive integer greater than or equal to 2, the N sub-chirp signals include a first sub-chirp signal and a second sub-chirp signal, and at least one parameter of the first sub-chirp signal is different from that of the second sub-chirp signal, where the parameter includes at least one of the following: a start time domain resource location, a start frequency domain resource location, an end time domain resource location, an end frequency domain resource location, a slope, a quantity of consecutive time domain resource units, or a quantity of consecutive frequency domain resource units; and the transmitting device sends first indication information to a receiving device, where the first indication information is used to indicate the first chirp signal, so that the receiving device can receive and decode a corresponding signal waveform, thereby reducing signal interference and improving communication and/or sensing quality.

## Description

This application claims priority to Chinese Patent Application No. 202410144607.0, filed with the China National Intellectual Property Administration on January 31, 2024, and entitled "Communication Method, Apparatus, and System," which is incorporated herein by reference in its entirety.

### Technical Field

This application relates to the communication field, and in particular, to a communication method, apparatus, and system.

### Background

For future 6G wireless networks, communication capabilities and sensing capabilities will be integrated and coexist, evolving into an "integrated communication and sensing" technology direction. This will endow 6G networks with the ability to sense the physical world at any time and in any place, fully meeting the interconnection of multi-dimensional senses while effectively supporting the wide-area expansion of communication capabilities, and opening up an application space that surpasses the connection capabilities of traditional mobile communication networks. In many industries and industry organizations, the integrated communication and sensing concept has been widely discussed, where the integrated communication and sensing waveform is an important and necessary consideration.

Currently, the peak side lobe ratio (PSLR) of a chirp waveform based on orthogonal frequency division multiplexing (OFDM) modulation is relatively high, where the side lobes of strong sensing targets tend to obscure the main lobes of weak sensing targets. In addition, side lobe leakage is considered, leading to significant communication and sensing interference and low sensing accuracy. How to improve the communication and/or sensing quality is an urgent problem to be solved.

### SUMMARY OF INVENTION

This application provides a communication method, apparatus, and system, to improve communication and/or sensing quality.

According to a first aspect, a communication method is provided. The method may be performed by a sending device, or may be performed by a module, such as a chip or a circuit, used in the sending device. This is not limited in this application. For ease of description, the following provides an example in which the method is performed by the sending device for description.

The method includes: generating a first chirp signal, where the first chirp signal includes N sub-chirp signals, N is a positive integer greater than or equal to 2, the N sub-chirp signals include a first sub-chirp signal and a second sub-chirp signal, at least one parameter of the first sub-chirp signal is different from at least one parameter of the second sub-chirp signal, and the parameter includes at least one of the following: a start time domain resource location, a start frequency domain resource location, an end time domain resource location, an end frequency domain resource location, a slope, a quantity of consecutive time domain resource units, or a quantity of consecutive frequency domain resource units; and sending first indication information, where the first indication information is used to indicate the first chirp signal.

The sub-chirp signal may be a modulation performed on the chirp signal based on orthogonal frequency division multiplexing modulation.

In this method, a modulation manner of the sub-chirp signal is used, and a style of the modulated chirp signal is indicated to the receiving device, so that the receive end can receive and decode a corresponding signal waveform, thereby reducing signal interference and improving communication and/or sensing quality.

In some implementation manners, the first indication information is used to indicate a generation matrix of the first chirp signal, where an element included in each row of the generation matrix of the first chirp signal respectively represents a time domain resource location of the N sub-chirp signals, and an element included in each column of the generation matrix of the first chirp signal respectively represents a frequency domain resource location of the N sub-chirp signals; or an element included in each row of the generation matrix of the first chirp signal respectively represents a frequency domain resource location of the N sub-chirp signals, and an element included in each column of the generation matrix of the first chirp signal respectively represents a time domain resource location of the N sub-chirp signals.

In this manner, the chirp signal pattern is indicated by generating a generator matrix, thereby saving resource indication overheads. In addition, the generator matrix is unique, enabling the receive end to uniquely and correctly decode the signal waveform.

In some implementations, the first indication information is used to indicate a dimension of the generator matrix of the first chirp signal; and the first indication information is further used to indicate at least one of the following: a location of a first element, a row of the generator matrix of the first chirp signal, or a column of the generator matrix of the first chirp signal, where a time domain resource and a frequency domain resource corresponding to the location of the first element are occupied by the sub-chirp signal.

In this manner, a specific distribution pattern of the chirp signal is indicated by limiting the physical meaning of the elements in the generator matrix, thereby enabling the receive end to uniquely and correctly decode the signal waveform.

In some implementations, the generator matrix of the first chirp signal is different from the generator matrix of the second chirp signal, and the receiving apparatuses for receiving the first chirp signal and the second chirp signal are different.

In this manner, different chirp signals are used for different receiving apparatuses, thereby further reducing signal interference between the multiple receiving apparatuses.

In some implementations, the first indication information is used to indicate a parameter of the N sub-chirp signals, where the parameter of the N sub-chirp signals includes at least one of the following: a time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, or a start frequency domain resource location and/or an end frequency domain resource location of each of the N sub-chirp signals.

In this manner, the parameter of the sub-chirp signal is directly indicated to the receiving device, so that the receiving end can receive and decode the corresponding chirp signal pattern, thereby reducing signal interference and improving communication quality.

In some implementations, the first indication information is used to indicate a first index, the first index corresponds to a first parameter, and the first parameter includes at least one of the following: a value of N, a positive or negative sign of a slope of each of the N sub-chirp signals, a distribution range of a slope of each of the N sub-chirp signals, a quantity of time domain units for each of the N sub-chirp signals to last, a quantity of frequency domain units for each of the N sub-chirp signals to last, a start time domain resource location and/or an end time domain resource location of each of the N sub-chirp signals, and/or a start frequency domain resource location and/or an end frequency domain resource location of each of the N sub-chirp signals.

In this manner, the index corresponding to the parameter group of the sub-chirp signal is directly indicated to the receiving device, so that the receiver end can receive and decode the corresponding chirp signal pattern, thereby reducing signal interference, improving communication quality, and saving indication overheads.

In some implementations, the first index is a plurality of first indexes, the plurality of first indexes are in a one-to-one correspondence with a plurality of first parameters, and each of the plurality of first parameters is a parameter of a chirp signal.

That is, there is a correspondence between the plurality of first indexes and the plurality of first parameters. For example, the correspondence may be in a form of a table.

In this manner, an index is indicated to the receiving device, and the receiving device may determine the pattern of the chirp signal based on the index, thereby further reducing indication overheads.

In some implementation, a pattern (pattern) of the first chirp signal corresponds to a second index, and the second index corresponds to a first sequence or a first codebook.

In this manner, communication modulation is performed by using the pattern of the chirp signal, thereby increasing an information capacity of communication.

In some implementations, the second index is a plurality of second indexes, and the plurality of second indexes are in a one-to-one correspondence with a plurality of sequences or a plurality of codebooks.

That is, there is a correspondence between the plurality of second indexes and the plurality of pieces of communication information. For example, the correspondence may be in a form of a table.

In this manner, an index is indicated to the receiving device, and the receiving device may determine the communication information based on the index, thereby further reducing indication overheads.

In some implementation manners, the first indication information is used to indicate a pattern (pattern) of the first chirp signal.

In some implementation manners, the first indication information is carried in at least one of radio resource control configuration PC5 RRC-configuration signaling, resource pool preconfiguration signaling, a media access control control element MAC CE, a layer 1 signal, or sidelink control information SCI of a direct communication interface, or the first indication information is carried in at least one of radio resource control configuration RRC-configuration signaling or downlink control information DCI.

This manner provides different bearers of the first indication information in different application scenarios, thereby improving scenario compatibility of the first indication information.

According to a second aspect, a communication method is provided. The method may be performed by a terminal device, or may be performed by a module (for example, a chip or a circuit) used in a receiving device. This is not limited in this application. For ease of description, the following provides descriptions using an example in which the method is performed by the receiving device.

The method includes: receiving first indication information, where the first indication information indicates a first chirp signal, the first chirp signal includes N sub-chirp signals, N is a positive integer greater than or equal to 2, the N sub-chirp signals include a first sub-chirp signal and a second sub-chirp signal, parameters of the first sub-chirp signal and the second sub-chirp signal are different, and the parameter includes at least one of the following: a start time domain resource, a start frequency domain resource, an end time domain resource location, an end frequency domain resource location, a slope, a quantity of consecutive time domain units, or a quantity of consecutive frequency domain units; and determining the first chirp signal based on the first indication information.

In some implementations, the first indication information is used to indicate a generation matrix of the first chirp signal, where an element included in each row of the generation matrix of the first chirp signal respectively represents a time domain resource location of the N sub-chirp signals, and an element included in each column of the generation matrix of the first chirp signal respectively represents a frequency domain resource location of the N sub-chirp signals; or an element included in each row of the generation matrix of the first chirp signal respectively represents a frequency domain resource location of the N sub-chirp signals, and an element included in each column of the generation matrix of the first chirp signal respectively represents a time domain resource location of the N sub-chirp signals.

In some implementations, the first indication information is used to indicate a dimension of the generation matrix of the first chirp signal; and the first indication information is further used to indicate at least one of the following: a location of a first element, a row of the generation matrix of the first chirp signal, or a column of the generation matrix of the first chirp signal, where a time domain resource and a frequency domain resource corresponding to the location of the first element are occupied by the sub-chirp signal.

In some implementations, the generation matrix of the first chirp signal is different from the generation matrix of the second chirp signal, and the first chirp signal and the second chirp signal are received by different receiving apparatuses.

In some implementations, the first indication information is used to indicate a parameter of the N sub-chirp signals, where the parameter of the N sub-chirp signals includes at least one of the following: a time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, and a start frequency domain resource location and/or an end frequency domain resource location of each of the N sub-chirp signals.

In some implementations, the first indication information is used to indicate a first index, the first index corresponds to a first parameter, and the first parameter includes at least one of the following: the value of N, a positive or negative value of the slope of each of the N sub-chirp signals, a distribution range of the slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, and a start frequency domain resource location and/or an end frequency domain resource location of each of the N sub-chirp signals.

In some implementations, the first index is a plurality of first indexes, the plurality of first indexes are in a one-to-one correspondence with a plurality of first parameters, and each of the plurality of first parameters is a parameter of a chirp signal.

In some implementations, a pattern of the first chirp signal corresponds to a second index, and the second index corresponds to a first sequence or a first codebook.

In some implementations, the second index is a plurality of second indexes, and the plurality of second indexes are in a one-to-one correspondence with a plurality of sequences or a plurality of codebooks.

In some implementations, the first indication information is used to indicate a pattern (pattern) of the first chirp signal.

In some implementations, the first indication information is carried in at least one of PC5 RRC-configuration, Resource pool preconfiguration, a MAC CE, layer 1 signaling, or SCI, or the first indication information is carried in at least one of RRC-configuration signaling or DCI.

It should be understood that the second aspect is an implementation on a network device side corresponding to the first aspect. The descriptions of the explanation, the supplement, and the beneficial effects of the first aspect are also applicable to the second aspect, and details are not described again.

According to a third aspect, a communications apparatus is provided, including a transceiver unit and a processing unit, where the processing unit is configured to generate a first chirp signal, where the first chirp signal includes N sub-chirp signals, N is a positive integer greater than or equal to 2, the N sub-chirp signals include a first sub-chirp signal and a second sub-chirp signal, at least one parameter of the first sub-chirp signal is different from that of the second sub-chirp signal, and the parameter includes at least one of the following: a start time domain resource location, a start frequency domain resource location, an end time domain resource location, an end frequency domain resource location, a slope, a quantity of consecutive time domain units, or a quantity of consecutive frequency domain units; and the transceiver unit is configured to send first indication information, where the first indication information is used to indicate the first chirp signal.

In some implementations, the first indication information is used to indicate a generator matrix of the first chirp signal, where an element included in each row of the generator matrix of the first chirp signal respectively represents a time domain resource location of the N sub-chirp signals, and an element included in each column of the generator matrix of the first chirp signal respectively represents a frequency domain resource location of the N sub-chirp signals; or an element included in each row of the generator matrix of the first chirp signal respectively represents a frequency domain resource location of the N sub-chirp signals, and an element included in each column of the generator matrix of the first chirp signal respectively represents a time domain resource location of the N sub-chirp signals.

In some implementations, the first indication information is used to indicate a dimension of the generation matrix of the first chirp signal; and the first indication information is further used to indicate at least one of the following: a location of a first element, a row of the generation matrix of the first chirp signal, or a column of the generation matrix of the first chirp signal, where a time domain resource and a frequency domain resource corresponding to the location of the first element are occupied by the sub-chirp signal.

In some implementations, the generation matrix of the first chirp signal is different from the generation matrix of the second chirp signal, and the first chirp signal is received by a different receiving apparatus from that of the second chirp signal.

In some implementations, the first indication information is used to indicate a parameter of the N sub-chirp signals, where the parameter of the N sub-chirp signals includes at least one of the following: a time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, or a start frequency domain resource location and/or an end frequency domain resource location of each of the N sub-chirp signals.

In some implementations, the first indication information is used to indicate a first index, the first index corresponds to a first parameter, and the first parameter includes at least one of the following: a value of N, a positive or negative sign of a slope of each of the N sub-chirp signals, a distribution range of a slope of each of the N sub-chirp signals, a quantity of time domain units for each of the N sub-chirp signals to last, a quantity of frequency domain units for each of the N sub-chirp signals to last, a start time domain resource location and/or an end time domain resource location of each of the N sub-chirp signals, and a start frequency domain resource location and/or an end frequency domain resource location of each of the N sub-chirp signals.

In some implementations, the first index is a plurality of first indexes, the plurality of first indexes are in a one-to-one correspondence with a plurality of first parameters, and each of the plurality of first parameters is a parameter of a chirp signal.

In some implementations, the pattern of the first chirp signal corresponds to a second index, and the second index corresponds to a first sequence or a first codebook.

In some implementations, the second index is a plurality of second indexes, and the plurality of second indexes are in a one-to-one correspondence with a plurality of sequences or a plurality of codebooks.

In some implementations, the first indication information is used to indicate the pattern of the first chirp signal.

In some implementations, the first indication information is carried in at least one of PC5 RRC-configuration, Resource pool preconfiguration, a MAC CE, layer 1 signaling, or SCI, or the first indication information is carried in at least one of RRC-configuration signaling or DCI.

According to a fourth aspect, a communication apparatus is provided, including a transceiver unit and a processing unit, where the transceiver unit is configured to receive first indication information, where the first indication information indicates a first chirp signal, the first chirp signal includes N sub-chirp signals, N is a positive integer greater than or equal to 2, the N sub-chirp signals include a first sub-chirp signal and a second sub-chirp signal, the first sub-chirp signal and the second sub-chirp signal have different parameters, and the parameter includes at least one of the following: a start time domain resource, a start frequency domain resource, an end time domain resource location, an end frequency domain resource location, a slope, a quantity of consecutive time domain units, or a quantity of consecutive frequency domain units; and the processing unit is configured to determine the first chirp signal based on the first indication information.

In some implementations, the first indication information is used to indicate a generation matrix of the first chirp signal, where an element included in each row of the generation matrix of the first chirp signal respectively represents a time domain resource location of the N sub-chirp signals, and an element included in each column of the generation matrix of the first chirp signal respectively represents a frequency domain resource location of the N sub-chirp signals; or an element included in each row of the generation matrix of the first chirp signal respectively represents a frequency domain resource location of the N sub-chirp signals, and an element included in each column of the generation matrix of the first chirp signal respectively represents a time domain resource location of the N sub-chirp signals.

In some implementations, the first indication information is used to indicate a dimension of the generation matrix of the first chirp signal; and the first indication information is further used to indicate at least one of the following: a location of a first element, a row of the generation matrix of the first chirp signal, or a column of the generation matrix of the first chirp signal, where a time domain resource and a frequency domain resource corresponding to the location of the first element are occupied by the sub-chirp signal.

In some implementations, the generation matrix of the first chirp signal is different from the generation matrix of the second chirp signal, and the first chirp signal and the second chirp signal are received by different receiving apparatuses.

In some implementations, the first indication information is used to indicate a parameter of the N sub-chirp signals, where the parameter of the N sub-chirp signals includes at least one of the following: a time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, and a start frequency domain resource location and/or an end frequency domain resource location of each of the N sub-chirp signals.

In some implementations, the first indication information is used to indicate a first index, the first index corresponds to a first parameter, and the first parameter includes at least one of the following: the value of N, a positive or negative value of the slope of each of the N sub-chirp signals, a distribution range of the slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, and a start frequency domain resource location and/or an end frequency domain resource location of each of the N sub-chirp signals.

In some implementations, the first index is a plurality of first indexes, the plurality of first indexes are in a one-to-one correspondence with a plurality of first parameters, and each of the plurality of first parameters is a parameter of a chirp signal.

In some implementations, a pattern of the first chirp signal corresponds to a second index, and the second index corresponds to a first sequence or a first codebook.

In some implementations, the second index is a plurality of second indexes, and the plurality of second indexes are in a one-to-one correspondence with a plurality of sequences or a plurality of codebooks.

In some implementations, the first indication information is used to indicate a pattern (pattern) of the first chirp signal.

In some implementations, the first indication information is carried in at least one of PC5 RRC-configuration, Resource pool preconfiguration, a MAC CE, layer 1 signaling, or SCI, or the first indication information is carried in at least one of RRC-configuration signaling or DCI.

It should be understood that the third aspect and the fourth aspect are implementation manners on the apparatus side corresponding to the first aspect and the second aspect. The explanations, supplements, and descriptions of beneficial effects of the first aspect and the second aspect are also applicable to the third aspect and the fourth aspect, and details are not repeated herein.

According to a fifth aspect, this application provides a communication apparatus, including an interface circuit and a processor, where the interface circuit is configured to implement a function of the transceiver unit in the third aspect, and the processor is configured to implement a function of the processing unit in the third aspect.

According to a sixth aspect, this application provides a communication apparatus, including an interface circuit and a processor, where the interface circuit is configured to implement a function of the transceiver unit in the fourth aspect, and the processor is configured to implement a function of the processing unit in the fourth aspect.

According to a seventh aspect, this application provides a computer-readable medium, where the computer-readable medium stores program code for execution by a terminal device, and the program code includes instructions for performing the method according to any one of the first aspect, any one of the possible implementations of the first aspect, or all possible implementations of the first aspect.

According to an eighth aspect, an embodiment of this application provides a computer-readable medium, where the computer readable medium stores program code executed by a network device, and the program code includes any one of the second aspect, the third aspect, or the possible manners of the second aspect; or an instruction of any one of the possible manners in the third aspect, or all the possible manners in the second aspect, or all the possible manners in the third aspect.

According to a ninth aspect, a computer program product storing a computer readable instruction is provided. When the computer readable instruction runs on a computer, the computer is enabled to perform the method in the first aspect, any one of the possible manners in the first aspect, or all the possible manners in the first aspect.

According to a tenth aspect, a computer program product that stores a computer readable instruction is provided. When the computer readable instruction runs on a computer, the computer is enabled to perform the method in the second aspect, any one of the possible manners in the second aspect, or all the possible manners in the second aspect.

According to an eleventh aspect, a communications system is provided, where the communications system includes an apparatus that has functions of the method in the first aspect, any one of the possible implementations of the first aspect, or all possible implementations of the first aspect, and the method in the second aspect, any one of the possible implementations of the second aspect, or all possible implementations of the second aspect.

According to a twelfth aspect, a processor is provided, configured to be coupled to a memory, and configured to perform the method in the first aspect, any one of the possible implementations of the first aspect, or all possible implementations of the first aspect.

According to a thirteenth aspect, a processor is provided, configured to be coupled to a memory, and configured to perform the method in the second aspect, any one of the possible implementations of the second aspect, or all possible implementations of the second aspect.

According to a fourteenth aspect, a chip system is provided. The chip system includes a processor, and may further include a memory, configured to execute a computer program or instructions stored in the memory, so that the chip system implements the method in any one of the first aspect or the second aspect, or any possible implementation of either of the first aspect or the second aspect. The chip system may include a chip, or may include the chip and another discrete component.

According to a fifteenth aspect, a communication method is provided. The method includes: generating, by a transmitting device, a first chirp signal, where the first chirp signal includes N sub-chirp signals, N is a positive integer greater than or equal to 2, the N sub-chirp signals include a first sub-chirp signal and a second sub-chirp signal, and at least one parameter of the first sub-chirp signal is different from that of the second sub-chirp signal, where the parameter includes at least one of the following: a start time domain resource location, a start frequency domain resource location, a slope, a quantity of consecutive time domain units, or a quantity of consecutive frequency domain units; the transmitting device sends first indication information to a receiving device, where the first indication information is used to indicate the first chirp signal, and correspondingly, the receiving device receives the first indication information; the receiving device determines the first chirp signal based on the first indication information.

### Brief Description of the Drawings

FIG. 1 is a schematic architectural diagram of a communications system 1000 to which an embodiment of this application is applied.
FIG. 2 is a schematic diagram of a time-frequency domain relationship of an OFDM-Chirp signal;
FIG. 3 is a schematic diagram of several chirp signal patterns.
FIG. 4 is a schematic diagram of an application scenario according to this application.
FIG. 5 is a schematic diagram of a communication method according to an embodiment of this application.
FIG. 6 is a schematic diagram of a chirp signal according to an embodiment of this application.
FIG. 7 is a schematic diagram illustrating a relationship between a chirp signal and a generator matrix according to an embodiment of this application.
FIG. 8 is a schematic diagram of another chirp signal according to an embodiment of this application.
FIG. 9 is a schematic diagram of another chirp signal according to an embodiment of this application.
FIG. 10 is a schematic diagram of a correspondence between a chirp signal and a communication sequence according to an embodiment of this application.
FIG. 11 is a schematic block diagram of a communication apparatus.
FIG. 12 is a schematic block diagram of still another communication apparatus.
FIG. 13 is a schematic block diagram of yet another communication apparatus.

### DESCRIPTION OF EMBODIMENTS

The technical solutions in the embodiments of this application are described below with reference to the accompanying drawings.

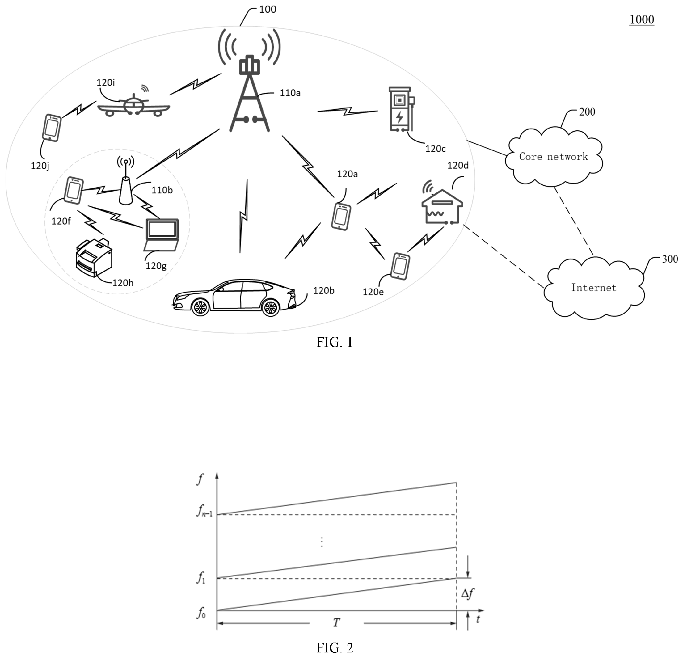

FIG. 1 is a schematic architectural diagram of a communication system 1000 to which an embodiment of this application is applied. As shown in FIG. 1, the communication system includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a-120j in FIG. 1). The terminal is connected to the radio access network device in a wireless manner, and the radio access network device is connected to the core network in a wireless or wired manner. The core network device and the radio access network device may be independent and different physical devices, or the functions of the core network device and the logical functions of the radio access network device may be integrated into a same physical device, or some functions of the core network device and some functions of the radio access network device may be integrated into a same physical device. The terminal and the terminal, and the radio access network device and the radio access network device may be connected to each other in a wired or wireless manner. FIG. 1 is merely a schematic diagram, and the communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communications system, a next generation base station in a 6th generation (6th generation, 6G) mobile communications system, a base station in a future mobile communications system, an access node in a WiFi system, or the like; or may be a module or unit that completes some functions of the base station, for example, may be a central unit (central unit, CU), or may be a distributed unit (distributed unit, DU). Here, the CU completes functions of the radio resource control (radio resource control, RRC) protocol and the packet data convergence protocol (packet data convergence protocol, PDCP) of the base station, and may further complete functions of the service data adaptation protocol (service data adaptation protocol, SDAP); and the DU completes functions of the radio link control (radio link control, RLC) layer and the medium access control (medium access control, MAC) layer of the base station, and may further complete some or all functions of the physical layer. For specific descriptions of the foregoing protocol layers, refer to related technical specifications of the 3rd Generation Partnership Project (3rd generation partnership project, 3GPP). The radio access network device may be a macro base station (for example, 110a in FIG. 1), or may be a micro base station or an indoor station (for example, 110b in FIG. 1), or may be a relay node, a donor node, or the like. Specific technologies and specific device forms used by the radio access network device are not limited in embodiments of this application. For ease of description, an example in which a base station is used as the radio access network device is used for description below.

The terminal device may be a device that provides voice/data to users, for example, a handheld device or an in-vehicle device with wireless connectivity capabilities. The terminal device may include user equipment, which is sometimes also referred to as a terminal, an access station, a UE station, a remote station, a wireless communication device, a user apparatus, or the like.

For example, the terminal device may be a mobile phone (mobile phone), a tablet computer (Pad), a computer with wireless transceiver functionality, a virtual reality (virtual reality, VR) terminal, an augmented reality (augmented reality, AR) terminal, a wireless terminal in industrial control, an entire vehicle, a wireless communication module in an entire vehicle, a telematics box (T-Box) for vehicle-to-everything communication, a road side unit (RSU), a wireless terminal in autonomous driving, a wireless terminal device in the Internet of Things (IoT), a wireless terminal device in telemedicine, a wireless terminal device in smart grids, a wireless terminal device in transportation security, a wireless terminal device in smart cities, a wireless terminal device in smart homes, or the like. This embodiment of this application does not limit this.

As an example rather than a limitation, in embodiments of this application, the terminal device may alternatively be a wearable device. The wearable device may also be referred to as a wearable intelligent device, and is a general term for wearable devices that are developed through intelligent design and development of daily wear by using wearable technologies, such as glasses, gloves, watches, clothes, and shoes. The wearable device is a portable device that is directly worn on a body or integrated into clothes or accessories of a user. The wearable device is not merely a hardware device, but can implement powerful functions through software support, data exchange, and cloud interaction. In a broad sense, wearable intelligent devices include devices that have complete functions, large sizes, and can implement complete or partial functions without depending on a smartphone, for example, a smart watch or smart glasses; and devices that focus only on a particular type of application function and need to cooperate with another device such as a smartphone to implement the function, for example, various smart bands or smart jewelry for measuring physical signs.

The terminal device may alternatively be a V2X device, for example, a smart car (smart car or intelligent car), a digital car (digital car), an unmanned car (unmanned car or driverless car or pilotless car or automobile), an automatic car (self-driving car or autonomous car), a pure electric vehicle (pure EV or Battery EV), a hybrid electric vehicle (hybrid electric vehicle, HEV), a range extended EV (range extended EV, REEV), a plug-in hybrid electric vehicle (plug-in HEV, PHEV), a new energy vehicle (new energy vehicle), or a road side unit (road site unit, RSU). The terminal device may alternatively be a device in device-to-device (device to device, D2D) communication, for example, an electricity meter or a water meter.

In addition, in the embodiments of this application, the terminal device may also be a terminal device in an IoT (Internet of Things) system. IoT is an important component of future information technology development. Its main technical feature is to connect objects through communication technology and Internet connection, thereby achieving an intelligent network that enables human-machine interconnection and machine-to-machine interconnection.

As described above, various terminal devices located on a vehicle (for example, placed inside the vehicle or installed inside the vehicle) can all be considered as in-vehicle terminal devices, which are also referred to as on-board units (OBUs) for example. The terminal device in this application may also be an in-vehicle module, in-vehicle assembly, in-vehicle component, in-vehicle chip, or on-board unit built into a vehicle as one or more components or units. The vehicle may implement the methods of this application by using the built-in in-vehicle module, in-vehicle assembly, in-vehicle component, in-vehicle chip, or on-board unit.

The base station and the terminal may be fixed in position, or may be movable. The base station and the terminal may be deployed on land, including indoor or outdoor, handheld, or vehicle-mounted; or may be deployed on water; or may be deployed on an aircraft, balloon, or artificial satellite. The embodiments of this application do not limit the application scenarios of the base station and the terminal.

The roles of the base station and the terminal can be relative. For example, the helicopter or drone 120i in Figure 1 can be configured as a mobile base station, where for the terminals 120j that access the radio access network 100 through 120i, terminal 120i functions as a base station; however, for the base station 110a, 120i is a terminal, meaning that 110a and 120i communicate with each other through a wireless air interface protocol. Of course, 110a and 120i may also communicate through an inter-base station protocol, in which case, relative to 110a, 120i also functions as a base station. Therefore, both the base station and the terminal can be uniformly referred to as communication devices. In Figure 1, 110a and 110b can be referred to as communication devices with base station functions, while 120a-120j can be referred to as communication devices with terminal functions.

Communication between a base station and a terminal, between base stations, and between terminals may be performed through licensed spectrum, or through unlicensed spectrum, or may be performed simultaneously through both licensed spectrum and unlicensed spectrum. Communication may be performed using spectrum below 6 gigahertz (gigahertz, GHz), or using spectrum above 6 GHz, or may be performed simultaneously using spectrum below 6 GHz and spectrum above 6 GHz. The embodiments of this application do not limit the spectrum resources used for wireless communication.

In the embodiments of this application, the functions of the base station may also be performed by modules (such as chips) within the base station, or by a control subsystem that includes the functions of the base station. The control subsystem here that includes the functions of the base station may be a control center in the aforementioned application scenarios such as smart grids, industrial control, intelligent transportation, and smart cities. The functions of the terminal may also be performed by modules (such as chips or modems) within the terminal, or by an apparatus that includes the functions of the terminal.

The technical solutions provided in the embodiments of this application may be applied to wireless communication between communication devices. Wireless communication between communication devices may include wireless communication between a network device and a terminal, wireless communication between network devices, and wireless communication between terminal devices. In the embodiments of this application, the term "wireless communication" may also be referred to as "communication" for short, and the term "communication" may also be described as "data transmission," "information transmission," or "transmission."

It may be understood that, in the embodiments of this application, the names of the signaling are merely examples, and may have different names in different systems and different scenarios. This is not limited in the embodiments of this application.

To facilitate understanding of the solutions in the embodiments of this application, some related concepts are explained.

### 1. Chirp signal

A chirp signal is a typical non-stationary signal, and has wide applications in fields such as communications, sonar, and radar. When an impulse is encoded, the carrier frequency of the impulse linearly increases or decreases within the pulse duration time domain, thereby forming a special time-frequency characteristic signal.

The chirp signal has many advantages in communications, for example, strong anti-interference capability, long transmission distance, and ability to penetrate complex environments. In addition, the chirp signal is widely used in fields such as radar, sonar, and navigation. For example, in optical fiber communication, an instantaneous shift of a center wavelength when a single pulse is transmitted due to the instability of a laser diode is called "chirp," and this effect can improve the transmission distance and speed of optical fiber communication.

The chirp signal in this application may also have other names, such as a time-frequency offset signal, a pulse signal, or the like. However, any signal that meets the characteristics of the chirp signal should fall within the protection scope of this application. For example, the chirp signal may also be referred to as a linear frequency modulation (linear frequency modulation, LFM) signal.

An LFM rectangular pulse signal may be represented as: $s \left(t\right) = \frac{1}{\sqrt{T}} u \left(t\right) exp \left[j2π\left({f}_{0}t+\frac{1}{2}{μt}^{2}\right)\right] ,$ $u \left(t\right) = rect \left(\frac{t}{T}\right) = \left\{\begin{matrix}1 , & \left|t/T\right| \leq 1 / 2 \\ 0 , & \left|t/T\right| > 1 / 2\end{matrix}\right. ,$ where f0 is a center frequency, u is a frequency modulation slope, B is a frequency modulation bandwidth, and T is a pulse width.

The LFM signal is a pulse compression signal widely used in radar systems. It can achieve both long detection range and high range resolution simultaneously through pulse compression technology. This signal has low sensitivity to Doppler frequency shifts, excellent detection performance, and strong robustness and anti-interference capabilities. However, the transmission rate of this LFM signal is relatively low.

A chirp signal is an OFDM-based chirp signal (OFDM-chirp), where the basic principle is to modulate the chirp signal onto different subcarrier groups. Since the subcarriers of an OFDM signal are orthogonal to each other, the signals on different subcarrier groups naturally satisfy orthogonality. The model of the OFDM-Chirp signal is as follows: $s \left(t\right) = {\sum }_{n = 0}^{N - 1} u \left(t-T\right) exp \left[j2π\left({f}_{n}t+{k}_{n}{t}^{2}/2\right)\right] ,$ where t is the time sample of the signal, u(t) is the rectangular window function, and fn and kn are the initial frequency and slope of the chirp signal on the nth subcarrier, respectively.

The time-frequency relationship of the OFDM-Chirp signal is illustrated in Figure 2. Here, Δ *f* represents the frequency domain bandwidth occupied by the sub-chirp signal, or the frequency domain resources it occupies.

Due to the multi-carrier characteristics of the OFDM-Chirp system, the transmission rate is relatively high, which can address the issue of low transmission rates in LMF signals. However, compared to traditional OFDM signals, each subcarrier occupies a larger bandwidth, resulting in lower spectral efficiency.

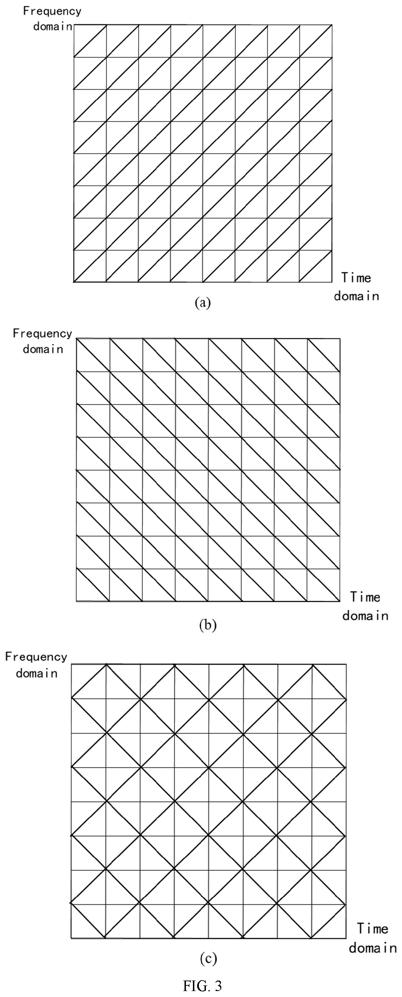

The basic chirp signal pattern or organization can be as shown in Figure 3, which can be divided into several types, such as up-chirp (slope k > 0), down-chirp (k < 0), and hybrid chirp. In Figure 3(a), an up-chirp is illustrated, where all sub-chirps (e.g., one of the diagonal lines) have the same slope, and all are greater than 0. In Figure 3(b), a down-chirp is illustrated, where all sub-chirps (e.g., one of the diagonal lines) have the same slope, and all are less than 0. In Figure 3(c), a hybrid chirp is illustrated, where some sub-chirps (e.g., one of the diagonal lines) have the same slope, all less than 0, while another part of sub-chirps (e.g., one of the diagonal lines) have the same slope, all greater than 0.

### 2. Time domain unit

The time domain unit may be one or more symbols, one or more slots, one or more mini-slots, one or more subframes, one or more frames, or the like. One or more time domain units may be consecutive in time, or may be discrete. It should be understood that time domain units in a resource pool are logically consecutive. In this application, for an understanding of definitions of a symbol, a mini-slot, a slot, a subframe, and a frame, refer to 3GPP protocols.

### 3. Frequency domain unit

The frequency domain unit may be one resource element (resource element, RE), a plurality of REs, one resource block (resource block, RB), a plurality of RBs, one subchannel (sub channel), or a plurality of subchannels. A size of a subchannel, that is, a quantity of one or more frequency domain continuous (continuous) or interleaved (interlaced) resource blocks (RBs) included in one subchannel, may be an integer such as 10, 12, 15, 20, 25, 50, 75, or 100.

Currently, the PSLR of the OFDM/chirp waveform is relatively high, where the sidelobe of a strong target tends to obscure the main lobe of a weak target. In addition, considering sidelobe leakage, the large interference between communication and sensing leads to low signal SNR and low sensing accuracy. Moreover, the communication method does not consider superimposing communication bit information on chirps, resulting in limited communication capacity.

In view of this, this application proposes a communication method, which can improve sensing accuracy.

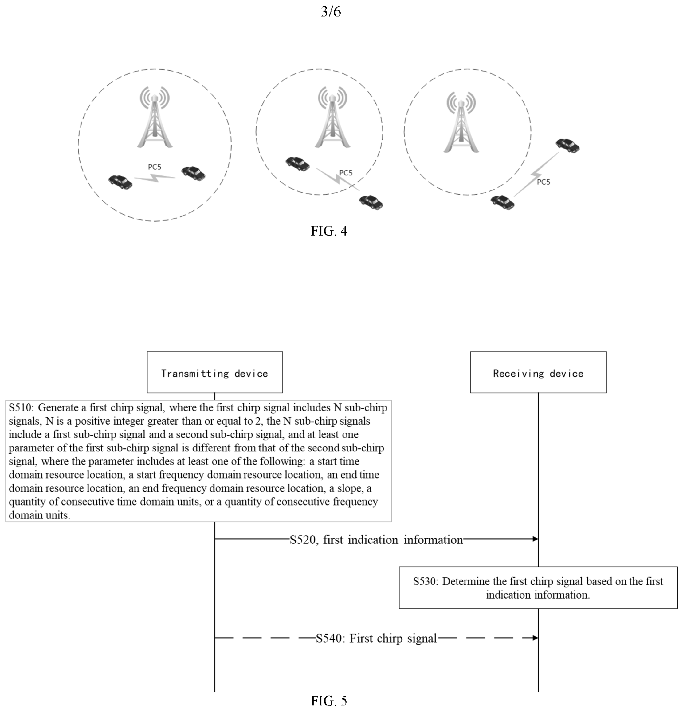

The communication method in this application can be applied to a system in which user equipments (UEs) directly communicate with each other, such as V2X and D2D, and is applicable to communication scenarios with or without network coverage. As shown in FIG. 4, the UE may be within the coverage of the network device or outside the coverage of the network device.

The communication method may be applicable to communication between a network device and a terminal device, between network devices, or between terminal devices. This is not specifically limited in this application. For example, when the communication method is applicable to a sensing scenario, the sensing mode may be that the network device A sends a sensing signal, and the network device A receives the sensing signal; or the network device A sends a sensing signal, and the network device B receives the sensing signal; or the network device A sends a sensing signal, and the terminal device receives the sensing signal; or the terminal device sends a sensing signal, and the network device A receives the sensing signal. That is, the communication method provided in this application can be applied to a communication scenario, a sensing scenario, or a scenario where communication and sensing are integrated. In conclusion, the communication method in this application can be applied to any scenario suitable for chirp signals.

The following describes the communication method by using an example in which a transmit device and a receive device serve as execution entities of the communication method. As shown in FIG. 5, the method includes the following steps:
S510: The transmit device generates a first chirp signal.

The first chirp signal includes N sub-chirp signals, where N is a positive integer greater than or equal to 2. In other words, the N sub-chirp signals constitute or form the first chirp signal. The N sub-chirp signals include a first sub-chirp signal and a second sub-chirp signal, where parameters of the first sub-chirp signal and the second sub-chirp signal are different. The parameter of the sub-chirp signal includes at least one of the following: a start time domain resource location, a start frequency domain resource location, a slope, a quantity of consecutive time domain units, or a quantity of consecutive frequency domain units.

The start time domain resource may be a time domain resource that is at an earliest time domain position and that is among time domain resources occupied by the sub-chirp signal. In other words, the start time domain resource may be a time domain resource with a smallest index among time domain resources occupied by the sub-chirp signal. The start time domain resource may be one time domain unit.

The start frequency domain resource may be a frequency domain resource that is at the lowest or the highest frequency domain position in the frequency domain resources occupied by the sub-chirp signal. In other words, the start frequency domain resource may be a frequency domain resource with the smallest index or the largest index in the frequency domain resources occupied by the sub-chirp signal. The start frequency domain resource may be one frequency domain unit.

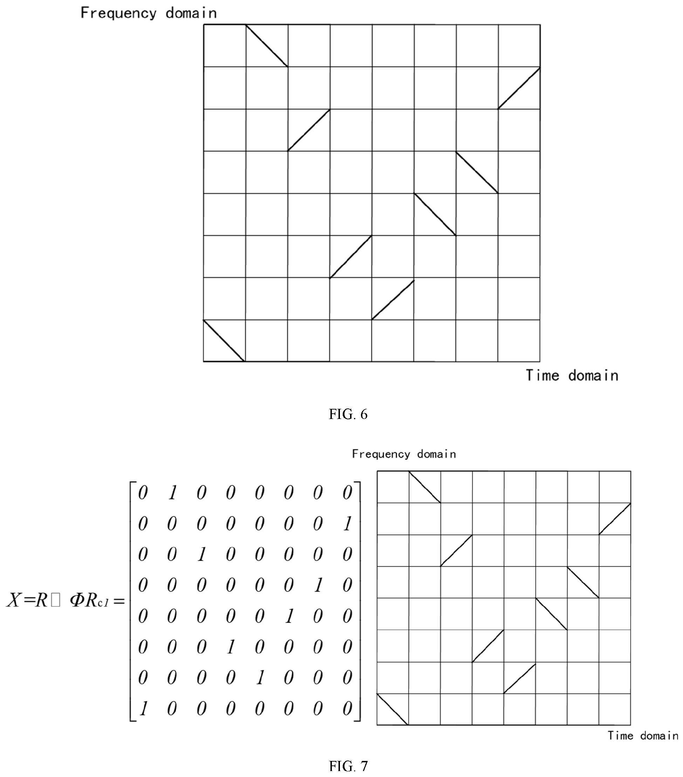

The slope is a slope of a line segment of the sub-chirp signal in the pattern diagram. As shown in FIG. 6, in the illustration of the chirp signal pattern (pattern), in the N sub-chirp signals included in the first chirp signal, the slopes of the line segments corresponding to each sub-chirp signal may be the same or may be different. As shown in FIG. 6, from a perspective of a time domain unit, a frequency of the sub-chirp signal may be 1 or -1.

The quantity of consecutive time domain units is a quantity of time domain units occupied by the sub-chirp signal. For example, in FIG. 6, each sub-chirp signal occupies the same quantity of time domain units, which is one time domain unit. However, this application is not limited thereto. For example, the first chirp signal may include a sub-chirp signal A and a sub-chirp signal B, where the sub-chirp signal A occupies three time domain units, and the sub-chirp signal B occupies two time domain units.

The quantity of continuous frequency domain units is a quantity of frequency domain units occupied by the sub-chirp signal. For example, in FIG. 6, each sub-chirp signal occupies a same quantity of frequency domain units, and each sub-chirp signal occupies one frequency domain unit. However, this application is not limited thereto. For example, the first chirp signal may include a sub-chirp signal A and a sub-chirp signal B, where a quantity of frequency domain units occupied by the sub-chirp signal A is 2, and a quantity of frequency domain units occupied by the sub-chirp signal B is 1.

It should be understood that the foregoing parameter may further include an end time domain resource location and an end frequency domain resource location. For example, using the first sub-chirp signal as an example, resources occupied by the first sub-chirp signal in the time domain correspond to one start time domain resource location and one end time domain resource location, where both the start time domain resource location and the end time domain resource location may be used to determine the resources occupied by the first sub-chirp signal in the time domain. The end frequency domain resource location is similar to the end time domain resource location, and details are not described again.

In addition, the parameters of the sub-chirp signal in this application are not limited to the foregoing examples. For example, the time domain resource location occupied by the sub-chirp signal may alternatively be determined by using a predefined location. For example, the predefined location is an intermediate location of the time domain resource occupied by the first sub-chirp signal. In conclusion, any parameter that can be used to determine the time domain resource and/or the frequency domain resource occupied by the sub-chirp signal may be applicable to this application, and falls within the protection scope of this application.

Other parameters that can be used to determine the time-frequency resource location of the sub-chirp signal shall fall within the protection scope of this application, for example, a reference location, a relative distance between a time domain resource and/or a frequency domain resource occupied by the sub-chirp signal and the reference location, and the like.

It should also be understood that parameters of the first sub-chirp signal and the second sub-chirp signal are different, where all the parameters may be different, or some of the parameters may be different. For example, the first sub-chirp signal and the second sub-chirp signal are different in one parameter. The parameters may include at least one of the following: an start time domain resource location, an start frequency domain resource location, an end time domain resource location, an end frequency domain resource location, a slope, a quantity of consecutive time domain resource units, or a quantity of consecutive frequency domain resource units.

The chirp signal in the communication method in this application may be a chirp signal obtained through further modulation based on an OFDM-Chirp.

S520: The transmitting device sends first indication information to the receiving device, and correspondingly, the receiving device receives the first indication information.

The first indication information is used to indicate the first chirp signal. For example, the first indication information is used to indicate a time domain resource and/or a frequency domain resource of the first chirp signal. In another example, the first indication information is used to indicate a pattern of the first chirp signal. The pattern may be a style, a pattern, a shape, or the like.

The first indication information may indicate a matrix for generating the first chirp signal or indicate at least one of the foregoing parameters, for example, a start time domain resource location, a start frequency domain resource location, an end time domain resource location, an end frequency domain resource location, a slope, a quantity of consecutive time domain units, or a quantity of consecutive frequency domain units (that is, a parameter related to the first sub-chirp signal and the second sub-chirp signal in S510), to determine the pattern of the first chirp signal.

The following describes an implementation of an indication manner of the first indication information.

Possible implementation 1: The first indication information is used to indicate a generation matrix of the first chirp signal.

The dimension of the chirp signal generation matrix is related to the quantity of time domain resource elements and/or frequency domain resource elements occupied by the chirp signal. For example, the dimension of the generation matrix A is 7*7, that is, the number of elements included in each row and column of the generation matrix is 7, indicating that the chirp signal A corresponding to the generation matrix A occupies seven time domain resource elements in the time domain and seven frequency domain resource elements in the frequency domain.

The elements included in each row of the generation matrix of the chirp signal respectively represent time domain resource locations of the N sub-chirp signals included in the chirp signal, and the elements included in each column of the generation matrix of the chirp signal respectively represent frequency domain resource locations of the N sub-chirp signals. As shown in FIG. 7, an example of a generation matrix of a chirp signal is illustrated. The matrix includes eight elements in each row and column, that is, the dimension of the matrix is 8*8. The values of the elements included in the matrix are 0 or 1. The value 1 (i.e., the first element) indicates that the time domain resource and frequency domain resource corresponding to the location of the element are occupied by the sub-chirp signal. The value 0 indicates that the time domain resource and frequency domain resource corresponding to the location of the element are not occupied by the sub-chirp signal.

It should be understood that a correspondence between a value of a matrix element and a meaning represented by the value may be preset, or may be configured. This is not limited in this application. For example, 1 indicates that the time domain resource and the frequency domain resource corresponding to the location of the element are not occupied by the chirp signal. 0 indicates that the time domain resource and the frequency domain resource corresponding to the location of the element are occupied by the chirp signal. A meaning represented by rows and columns of the matrix may also be predefined or configured. For example, elements included in a row of the generation matrix of the first chirp signal respectively represent frequency domain resource locations of the N sub-chirp signals, and elements included in a column of the generation matrix of the first chirp signal respectively represent time domain resource locations of the N sub-chirp signals.

The first indication information indicates the generation matrix of the first chirp signal, and includes indicating a dimension of the generation matrix of the first chirp signal. The first indication information further indicates at least one of the following: a location of the first element, a row of the generation matrix of the first chirp signal, or a column of the generation matrix of the first chirp signal. For details, refer to FIG. 7. The first indication information indicates that the dimension of the generation matrix is 8*8, and the first indication information may further indicate elements in each row and each column in FIG. 7. The first element is 1. The first indication information may further indicate a location where the first element is located, or in other words, the first indication information may further indicate a location where the first element is located. For example, the chirp signal pattern (right figure) in FIG. 7 is generated based on (c) in FIG. 3, for example, the chirp signal pattern is generated by using (c) in FIG. 3 as a basis. That is, R in FIG. 7 is the generation matrix, and Rc1 indicates that the first chirp signal X is generated based on (c) in FIG. 3 as a basis.

It should be understood that the generator matrix in FIG. 7 is merely an example. Other transformation forms of the matrix should also fall within the protection scope of this application. Alternatively, the generator matrix in FIG. 7 is only a part of a matrix and is included in a larger matrix, for example: $\left[\begin{matrix}0 & 1 & 0 & 0 & 0 & 0 & 0 & 0 & 0 \\ 0 & 0 & 0 & 0 & 0 & 0 & 0 & 1 & 0 \\ 0 & 0 & 1 & 0 & 0 & 0 & 0 & 0 & 0 \\ 0 & 0 & 0 & 0 & 0 & 0 & 1 & 0 & 0 \\ 0 & 0 & 0 & 0 & 0 & 1 & 0 & 0 & 0 \\ 0 & 0 & 0 & 1 & 0 & 0 & 0 & 0 & 0 \\ 0 & 0 & 0 & 0 & 1 & 0 & 0 & 0 & 0 \\ 1 & 0 & 0 & 0 & 0 & 0 & 0 & 0 & 0 \\ 0 & 0 & 0 & 0 & 0 & 0 & 0 & 0 & 0\end{matrix}\right]$

The matrix has a dimension of 9*9, where an element in the ninth row and an element in the ninth column are both 0. The chirp signal corresponding to this matrix is the same as the chirp signal corresponding to the matrix in FIG. 7. Compared with the matrix in FIG. 7, this matrix has one more row and one more column. Another matrix, for example, a matrix that has one more row than the matrix in FIG. 7, where an element in the additional row is all 0, may also represent a sub-chirp signal that is the same as the matrix in FIG. 7.

In conclusion, a form of the matrix is not limited in this application, and any matrix that can indicate each sub-chirp signal, or can indicate the first chirp signal, should fall within the protection scope of this application.

The receiving device may determine the quantity of sub-chirp signals, the locations of the sub-chirp signals, and the time domain resources and frequency domain resources occupied by the sub-chirp signals based on the generator matrix. The receiving device may further determine the first chirp signal based on the N sub-chirp signals.

It should be understood that different chirp signals have different generation matrices. For example, the first chirp signal corresponds to a generation matrix 1, and the second chirp signal corresponds to a generation matrix 2, where the matrix 1 is different from the matrix 2. Specifically, the generation matrices may be different in the number of first elements, the positions of the first elements, the dimensions of the generation matrices, or the like.

The different chirp signals may be sent by a transmitting device to different receiving devices. For example, the transmitting device sends the first chirp signal to the receiving device 1, and correspondingly, the receiving device 1 receives the first chirp signal. The transmitting device sends the second chirp signal to the receiving device 2, and correspondingly, the receiving device 2 receives the second chirp signal. Different chirp signals are generated by using different generation matrices and sent to different receiving devices, thereby avoiding signal interference between multiple receiving devices, and improving communication quality or perception quality.

Possible implementation 2: The first indication information is used to indicate a parameter of the first chirp signal.

Specifically, the first indication information is used to indicate a parameter of a sub-chirp signal included in the first chirp signal. For example, the first chirp signal includes N sub-chirp signals, and a parameter of the N sub-chirp signals includes at least one of the following: a time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, and a start frequency domain resource location and/or an end frequency domain resource location of each of the N sub-chirp signals.

Optionally, the frequency domain resource location of each sub-chirp signal may alternatively be indicated by a predefined frequency domain resource location, and the time domain resource location of each sub-chirp signal may alternatively be indicated by a predefined time domain resource location, for example, an intermediate location of a time domain resource occupied by each sub-chirp signal and/or an intermediate location of a frequency domain resource occupied by each sub-chirp signal. Alternatively, any other parameter that can be used to determine the time-frequency resource location of the sub-chirp signal shall fall within the protection scope of this application, for example, a reference location and a parameter such as a relative distance between a time domain resource and/or a frequency domain resource occupied by the sub-chirp signal and the reference location.

In a possible indication manner, the first indication information directly indicates specific values of the foregoing parameters. For example, the first indication information indicates that the first chirp signal includes three sub-chirp signals. It is assumed that the three sub-chirp signals are respectively a sub-chirp signal A, a sub-chirp signal B, and a sub-chirp signal C. The first indication information may indicate that an index of a start time domain resource of the sub-chirp signal A is 1, a quantity of time domain units for the sub-chirp signal A to last is 3, an index of a start frequency domain resource of the sub-chirp signal A is 2, a quantity of frequency domain units for the sub-chirp signal A to last is 2, and a slope of the sub-chirp signal A is 1; an index of a start time domain resource of the sub-chirp signal B is 4, a quantity of time domain units for the sub-chirp signal B to last is 2, an index of a start frequency domain resource of the sub-chirp signal B is 3, a quantity of frequency domain units for the sub-chirp signal B to last is 2, and a slope of the sub-chirp signal B is -1; an index of a start time domain resource of the sub-chirp signal C is 8, a quantity of time domain units for the sub-chirp signal C to last is 1, an index of a start frequency domain resource of the sub-chirp signal C is 1, a quantity of frequency domain units for the sub-chirp signal C to last is 1, and a slope of the sub-chirp signal C is -1.

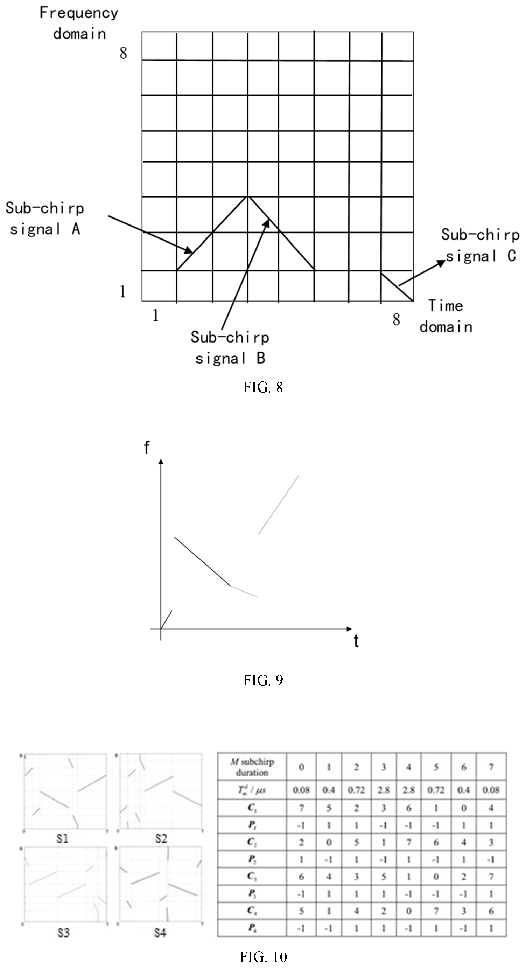

The receiving device may determine the pattern of the first chirp signal based on the first indication information, as shown in FIG. 8.

In another possible indication manner, the first indication information indirectly indicates a specific value of the parameter. For example, the first indication information indicates a first index, the first index corresponds to the first parameter, and the first parameter includes at least one of the parameters of the sub-chirp signals. Specifically, the value of N, a positive or negative sign of a slope of each of the N sub-chirp signals, a distribution range of the slope of each of the N sub-chirp signals, a quantity of time domain units for each of the N sub-chirp signals to last, a quantity of frequency domain units for each of the N sub-chirp signals to last, a start time domain resource location and/or an end time domain resource location of each of the N sub-chirp signals, and/or a start frequency domain resource location and/or an end frequency domain resource location of each of the N sub-chirp signals.

The positive or negative sign of the slope of each sub-chirp signal may be as follows: 1 represents that the slope is positive, and 0 represents that the slope is negative. A distribution range of the slope of each sub-chirp signal may be as follows: 0, 1, 2, and 3 respectively represent that the slope is within ±22.5°, ± (0-45°), ± (45°-67.5°), and ± (67.5°-90°).

It should be understood that the first index may be a plurality of first indexes, where the plurality of first indexes are in a one-to-one correspondence with the plurality of first parameters, and each of the plurality of first parameters is a parameter of a chirp signal. In other words, patterns of a plurality of chirp signals may form a set, where different patterns in the set correspond to different indexes. The set is merely an example of a relationship between a plurality of patterns, and this application is not limited thereto. For example, a relationship between the plurality of patterns and indexes or a specific parameter may be presented in a form of a table. The following shows an example:

| Pattern Index | Number of sub-chirp signals | Slope of sub-chirp signal | Slope distribution of sub-chirp signal | Number of continuous time-domain slots | Number of subcarriers |
|---|---|---|---|---|---|
| 1 | 1 | (1) | (0) | (10) | 1 |
| 2 | 4 | (1, 0, 0, 1) | (1, 1, 0, 1) | (1, 4, 1, 4) | 1 |
| 3 | 8 | (1, 0, 1, 0, 0, 1, 0, 1) | (1, 1, 1, 1, 0, 0, 0, 2) | (1, 1, 2, 1, 1, 2, 1, 1) | 1 |
| ... | ... | ... | ... | ... | ... |

It should be understood that the example in the above table uses subcarriers as frequency domain units. It should also be understood that the above table is merely an example, and in actual implementation, the parameters and values in the table may be preset or adjusted. The above table may also be implemented in a partial or entire form.

When the pattern index (index) is 2, the corresponding sub-chirp signal may take the form shown in FIG. 9.

Specifically, which sub-chirp signal pattern is used may be flexibly indicated based on the actual communication and sensing scenario. For example, under an minimum signal to interference plus noise ratio (Signal to Interference plus Noise Ratio, SINR), a chirp signal with a pattern index of 1 may be used. In the case of the maximum communication capacity, a chirp signal with a pattern index of 2 may be used. The transmitting device may flexibly and dynamically indicate the change in the pattern to achieve the optimal system performance.

Optionally, the chirp signal may further correspond to communication information. For example, communication bits may be modulated on the sub-chirp signals simultaneously to improve the communication capacity. Specifically, the pattern of the first chirp signal corresponds to a second index, and the second index corresponds to the first sequence or the first codebook. The first sequence is a communication sequence, and the first codebook is a communication codebook. The second index may be a plurality of second indexes, where the plurality of second indexes are in a one-to-one correspondence with a plurality of sequences or a plurality of codebooks. That is, different sub-chirp signals (or their combinations) correspond to different indexes of communication codebooks or sequences. The sequence is a communication modulation sequence or a communication signal.

For example, as shown in FIG. 10, a communication sequence is modulated on each sub-chirp signal (the sub-chirp signals may have different slopes, duration time domains, and numbers of occupied subcarriers, etc.) The sequence is the Ci in the table. Different sub-chirp signals (or their combinations) may carry different communication information sequences and content. In FIG. 10, the sub-chirp signal included in the chirp signal S1 has a slope of P1, that is, the slopes of the sub-chirp signals are sequentially {-1, 1, 1, -1, -1, -1, 1, 1}. The information sequence corresponding to the sub-chirp signal is Ci, for example, C1 is {7 5 2 3 6 1 0 4}. FIG. 10 is merely an example for illustration. For example, the sequence Ci may also be represented by a 0-1 sequence, corresponding to a communication signal. Here, different chirp signals S1, S2, S3, and S4 correspond to different sequences.

When the communication scenario or the communication and sensing scenario is sidelink, the first indication information may be carried in direct communication interface radio resource control configuration (PC5 radio resource control configuration, PC5 RRC-configuration) signaling, resource pool preconfiguration signaling (Resource pool preconfiguration), a media access control control element (media access control control element, MAC CE), layer 1 (layer 1, L1) signaling, or sidelink control information (sidelink control information, SCI) at least one of these. When the communication scenario or the communication and sensing scenario is a downlink scenario, the first indication information may be carried in radio resource control configuration RRC-configuration signaling or downlink control information (downlink control information, DCI) at least one of these.

Specifically, the first indication information may be implemented through static/semi-static configuration by using RRC-configuration signaling, or may be dynamically indicated by using MAC CE/L1 signaling/DCI. Further, the indication information of the sub-chirp signal pattern may be decomposed and combined, or may be indicated or activated in a nested manner, for example, the RRC-configuration may configure a dimension of a generating matrix of the pattern and a quantity of elements "1", the SCI/MAC CE may indicate a specific location of "1"; or, for another example, the RRC-configuration may configure the pattern indication information, and the DCI may indicate whether a certain pattern index is activated for use, and the like.

It should be noted that "sending" in this step may have different interpretations in different application scenarios. For example, in an O-RAN scenario or when this step is applied to a chip, the sending may be understood as output. For example, in an application scenario of the chip, the baseband module outputs the first indication information to the radio frequency module. Other methods that can be used as substitutes or equivalents to the meanings of "sending" and "receiving" in this application should fall within the protection scope of this application.

It should also be understood that "indicate" or "used for indicating" in this application may also be understood as "include" or "comprise" or the like. For example, the first indication information indicates the parameter of the sub-chirp signal, or the first indication information includes the parameter of the sub-chirp signal.

S530: The receiving device determines the first chirp signal based on the first indication information.

Specifically, for a manner in which the receiving device determines the first chirp signal based on the first indication information, refer to the description in S420, and details are not described again.

Optionally, the method may further include the following steps:

S540: The transmitting device sends the first chirp signal to the receiving device, and correspondingly, the receiving device receives the first chirp signal based on the first indication information.

Optionally, the sending device may send the first indication information and the first chirp signal at the same time, or may send the first indication information and the first chirp signal in sequence. An execution order between the steps is not limited in this application.

In this method, a modulation manner of a sub-chirp signal is used, and a pattern indication method (static/semi-static/dynamic) is used, so that a receive end can receive and decode a pattern of the communication and sensing waveform, thereby implementing separation and demodulation of the communication and sensing information, and improving performance of the communication and sensing system. Further, in this method, the communication information is modulated based on different patterns, thereby increasing an information capacity of the communication.

The implementations described in this specification may be independent solutions, or may be combined based on internal logic thereof. These solutions fall within the protection scope of this application.

It should be understood that the first device in this application may be a network device, or may be a terminal device. The second device may be a network device, or may be a terminal device. The solutions in this application are applicable to a communication scenario in which at least one of the first device and the second device is a terminal device.

In the foregoing embodiments provided in this application, the methods provided in the embodiments of this application are described from the perspective of interaction between devices. To implement the functions in the methods provided in the foregoing embodiments of this application, the network device or the terminal device may include a hardware structure and/or a software module, and implement the foregoing functions in a form of a hardware structure, a software module, or a combination of a hardware structure and a software module. Whether a function in the foregoing functions is performed by the hardware structure, the software module, or the combination of the hardware structure and the software module depends on particular applications and design constraints of the technical solutions.

The module division in the embodiments of this application is an example, and is merely logical function division, and may be other division in actual implementation. In addition, functional modules in embodiments of this application may be integrated into one processor, or each of the modules may exist alone physically, or two or more modules may be integrated into one module. The integrated module may be implemented in a form of a hardware, or may be implemented in a form of a software functional module.

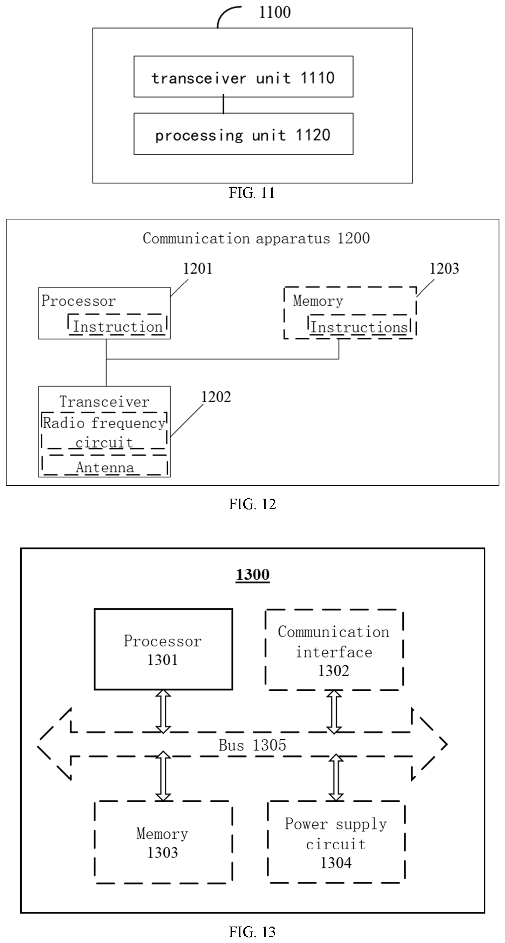

Consistent with the aforementioned concept, as shown in Figure 11, an embodiment of this application also provides an apparatus 1100 configured to implement the functions of the transmitting device or the receiving device in the aforementioned method. For example, the apparatus may be a software module or a chip system. In the embodiments of this application, the chip system may be composed of a chip, or may include a chip and other discrete components. The apparatus 1100 may include a processing unit 1120 and a communication unit 1110.

In the embodiments of this application, the communication unit may also be referred to as a transceiver unit, which may include a sending unit and/or a receiving unit, each configured to perform the steps of sending and receiving by the sending device or the receiving device in the foregoing method embodiments.

The following will provide a detailed description of the communication apparatus provided in the embodiments of this application with reference to FIG. 11 to FIG. 13. It should be understood that the description of the apparatus embodiments corresponds to the description of the method embodiments. Therefore, for content that is not described in detail, reference may be made to the foregoing method embodiments. For brevity, details are not repeated herein.

The communication unit may also be referred to as a transceiver, transceiver machine, transceiver module, transceiver device, or the like. The processing unit may also be referred to as a processor, processing board, processing module, processing device, or the like. Optionally, the component in the communication unit 1110 that is configured to implement a receiving function may be considered as a receiving unit, and the component in the communication unit 1110 that is configured to implement a sending function may be considered as a sending unit, that is, the communication unit 1110 includes a receiving unit and a sending unit. The communication unit may sometimes also be referred to as a transceiver machine, transceiver, or interface circuit, or the like. The receiving unit may sometimes also be referred to as a receiver machine, receiver, or receiving circuit, or the like. The sending unit may sometimes also be referred to as a transmitter machine, transmitter, or transmitting circuit, or the like.

When the communications apparatus 1100 performs the function of the transmitting device in the procedure shown in FIG. 4 in the foregoing embodiment:

The communications unit is configured to receive and send information. For example, the communications unit is configured to send first indication information, send a first chirp signal, or the like.

The processing unit is configured to generate a first chirp signal, and the like.

When the communications apparatus 1100 performs the function of the receiving device in any one of the procedures shown in FIG. 4 in the foregoing embodiment:

The processing unit is configured to determine the first chirp signal based on the first indication information, and the like.

The communication unit is configured to receive and send information. For example, the communication unit is configured to receive first indication information, or receive a first chirp signal, or the like.

The foregoing is merely an example. The processing unit 1120 and the communication unit 1110 may further perform other functions. For more detailed descriptions, refer to related descriptions in the method embodiment shown in FIG. 3 or other method embodiments. Details are not described herein again.

As another possible product form, the transmitting device and the receiving device described in the embodiments of this application may be implemented by using a general bus architecture. For ease of description, refer to FIG. 12. FIG. 12 is a schematic structural diagram of a communications apparatus 1200 according to an embodiment of this application. The communications apparatus 1200 includes a processor 1201 and a transceiver 1202. The communications apparatus 1200 may be a transmitting device, or a chip or a chip system in the transmitting device; or the communications apparatus 1200 may be a receiving device, or a chip or a module in the receiving device. FIG. 12 shows only main components of the communications apparatus 1200. In addition to the processor 1201 and the transceiver 1202, the communications apparatus 1200 may further include a memory 1203 and an input/output apparatus (not shown in the figure).

Optionally, the processor 1201 is mainly configured to process communication protocols and communication data, control the entire communication apparatus, execute software programs, and process data of the software programs. The memory 1203 is mainly configured to store software programs and data. The transceiver 1202 may include a radio frequency circuit and an antenna, where the radio frequency circuit is mainly configured to perform conversion between a baseband signal and a radio frequency signal, and process the radio frequency signal. The antenna is mainly configured to receive and transmit radio frequency signals in the form of electromagnetic waves. The input/output device, such as a touchscreen, display, or keyboard, is mainly configured to receive data input by a user and output data to the user.

Optionally, the processor 1201, the transceiver 1202, and the memory 1203 may be connected through a communication bus.

When the communication device is powered on, the processor 1201 may read the software program from the memory 1203, interpret and execute the instructions of the software program, and process the data of the software program. When there is a need to send data wirelessly, the processor 1201 performs baseband processing on the data to be sent, and then outputs the baseband signal to the radio frequency circuit. The radio frequency circuit performs radio frequency processing on the baseband signal and then sends the radio frequency signal to the outside in the form of electromagnetic waves through the antenna. When data is received by the communication device, the radio frequency circuit receives the radio frequency signal through the antenna, converts the radio frequency signal into a baseband signal, and outputs the baseband signal to the processor 1201. The processor 1201 then converts the baseband signal into data and processes the data.

In another implementation, the radio frequency circuit and the antenna may be disposed independently of a processor performing baseband processing. For example, in a distributed scenario, the radio frequency circuit and the antenna may be disposed in a remote manner independent of the communications apparatus.

In some embodiments, in terms of hardware implementation, a person skilled in the art may figure out that the communication apparatus 1100 may be implemented in a form of the communication apparatus 1200 shown in FIG. 12.

As an example, the function/implementation process of the processing module 1120 in FIG. 11 may be implemented by the processor 1201 in the communication apparatus 1200 shown in FIG. 12 by invoking the computer-executable instructions stored in the memory 1203. The function/implementation process of the transceiver module 1110 in FIG. 11 may be implemented by the transceiver 1202 in the communication apparatus 1200 shown in FIG. 12.

As yet another possible product form, the sending device and the receiving device in this application may use the composition structure shown in FIG. 13 or include the components shown in FIG. 13. FIG. 13 is a schematic diagram of a composition of a communication apparatus 1300 according to this application.

As shown in FIG. 13, the communications apparatus 1300 includes at least one processor 1301. Optionally, the communications apparatus further includes a communications interface 1302.

When the program instructions involved are executed by the at least one processor 1301, the apparatus 1300 may implement the method provided in any one of the foregoing embodiments and any possible design thereof. Alternatively, the processor 1301 is configured to implement the method provided in any one of the foregoing embodiments and any possible design thereof by using a logic circuit or by executing code instructions.

The communications interface 1302 may be configured to receive program instructions and transmit the program instructions to the processor. Alternatively, the communications interface 1302 may be configured to perform communication interaction between the communications apparatus 1300 and another communications device, for example, exchange control signaling and/or service data. For example, the communications interface 1302 may be configured to receive a signal from another apparatus other than the communications apparatus 1300 and transmit the signal to the processor 1301, or send a signal from the processor 1301 to another communications apparatus other than the communications apparatus 1300.

Optionally, the communications interface 1302 may be a code and/or data read/write interface circuit, or the communications interface 1302 may be a signal transmission interface circuit between the communication processor and the transceiver, or may be a pin of the chip.

Optionally, the communication apparatus 1300 may further include at least one memory 1303, where the memory 1303 may be configured to store program instructions and/or data that are required and involved. It should be noted that the memory 1303 may exist independently of the processor 1301, or may be integrated with the processor 1301. The memory 1303 may be located inside the communication apparatus 1300, or may be located outside the communication apparatus 1300, which is not limited.

Optionally, the communication apparatus 1300 may further include a power supply circuit 1304, where the power supply circuit 1304 may be configured to supply power to the processor 1301. The power supply circuit 1304 may be located in a same chip as the processor 1301, or may be located in another chip other than the chip in which the processor 1301 is located.

Optionally, the communication apparatus 1300 may further include a bus 1305, and the parts in the communication apparatus 1300 may be interconnected through the bus 1305.

In some embodiments, in terms of hardware implementation, a person skilled in the art may figure out that the communication apparatus 1100 shown in FIG. 11 may be implemented in a form of the communication apparatus 1300 shown in FIG. 13.

In an example, a function/implementation process of the processing module 1120 in FIG. 11 may be implemented by the processor 1301 in the communication apparatus 1300 shown in FIG. 13 by invoking the computer-executable instruction stored in the memory 1303. A function/implementation process of the transceiver module 1110 in FIG. 11 may be implemented by the communication interface 1302 in the communication apparatus 1300 shown in FIG. 13.

It should be noted that the structure shown in FIG. 13 does not constitute a specific limitation on the sending device or the receiving device. For example, in some other embodiments of this application, the sending device and the receiving device may include more or fewer components than those shown in the figure, or combine some components, or split some components, or have different component arrangements. The components shown in the figure may be implemented by hardware, software, or a combination of software and hardware.

When the communication apparatus is a chip applied to a terminal device, the terminal device chip implements the functions of the terminal device in the foregoing method embodiments. The terminal device chip receives information from another module (for example, a radio frequency module or an antenna) in the terminal device, where the information is sent by the network device to the terminal device; or the terminal device chip sends information to another module (for example, a radio frequency module or an antenna) in the terminal device, where the information is sent by the terminal device to the network device.

When the communication apparatus is a chip applied to a network device, the network device chip implements the functions of the network device in the foregoing method embodiments. The network device chip receives information from another module (for example, a radio frequency module or an antenna) in the network device, where the information is sent by the terminal device to the network device; or the network device chip sends information to another module (for example, a radio frequency module or an antenna) in the network device, where the information is sent by the network device to the terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

In the embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, enabling the processor to read information from the storage medium and write information into the storage medium. Certainly, the storage medium may also be a component of the processor. The processor and the storage medium may be located in an ASIC. In addition, the ASIC may be located in a network device or a terminal device. Certainly, the processor and the storage medium may also exist as discrete components in the network device or the terminal device.

A person skilled in the art should understand that embodiments of this application may be provided as a method, a system, or a computer program product. Therefore, this application may be implemented in the form of a hardware-only implementation, a software-only implementation, or an implementation that combines software and hardware. In addition, this application may be implemented in the form of a computer program product implemented on one or more computer-usable storage media (comprising but not limited to, disk storage, optical storage, and the like) that include computer-usable program code.

This application is described with reference to flowcharts and/or block diagrams of methods, devices (systems), and computer program products according to this application. It should be understood that each of the procedures and/or blocks in the flowcharts and/or block diagrams, and combinations of procedures and/or blocks in the flowcharts and/or block diagrams, may be implemented by computer program instructions. These computer program instructions may be provided to a processor of a general-purpose computer, a special-purpose computer, an embedded processor, or another programmable data processing device to produce a machine, so that the instructions executed by a processor of a computer or another programmable data processing device generate an apparatus for implementing a specific function in one or more procedures in the flowcharts and/or in one or more blocks in the block diagrams.

These computer program instructions may also be stored in a computer-readable memory that is capable of causing a computer or other programmable data processing device to operate in a specific manner, so that the instructions stored in the computer-readable memory produce an article of manufacture that includes an instruction device that implements a function specified in one or more processes in the flowcharts and/or in one or more blocks in the block diagrams.

It is clearly understood that a person skilled in the art can make various modifications and variations to this application without departing from the scope of this application. Therefore, if these modifications and variations of this application fall within the scope of the claims of this application and their equivalent technologies, this application is also intended to cover these modifications and variations.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined according to the protection scope of the claims.

## Claims

1. A communication method, comprising:
generating a first chirp signal, wherein the first chirp signal comprises N sub-chirp signals, N is a positive integer greater than or equal to 2, the N sub-chirp signals comprise a first sub-chirp signal and a second sub-chirp signal, at least one parameter of the first sub-chirp signal is different from at least one parameter of the second sub-chirp signal, and the parameter comprises at least one of the following: a start time domain resource location, a start frequency domain resource location, an end time domain resource location, an end frequency domain resource location, a slope, a quantity of consecutive time domain units, or a quantity of consecutive frequency domain units;
transmitting first indication information, wherein the first indication information is used to indicate the first chirp signal.

2. The method according to claim 1, wherein the first indication information is used to indicate a generator matrix of the first chirp signal, elements included in rows of the generator matrix of the first chirp signal respectively represent time domain resource locations of the N sub-chirp signals, and elements included in columns of the generator matrix of the first chirp signal respectively represent frequency domain resource locations of the N sub-chirp signals; or elements included in rows of the generator matrix of the first chirp signal respectively represent frequency domain resource locations of the N sub-chirp signals, and elements included in columns of the generator matrix of the first chirp signal respectively represent time domain resource locations of the N sub-chirp signals.

3. The method according to claim 2, wherein the first indication information is used to indicate a dimension of a generation matrix of the first chirp signal;
the first indication information is further used to indicate at least one of the following: a location of a first element, a row of the generation matrix of the first chirp signal, or a column of the generation matrix of the first chirp signal, wherein a time domain resource and a frequency domain resource corresponding to the location of the first element are occupied by the sub-chirp signal.

4. The method according to claim 2 or 3, wherein the generation matrix of the first chirp signal is different from a generation matrix of a second chirp signal, and a receiving apparatus of the first chirp signal is different from a receiving apparatus of the second chirp signal.

5. The method according to claim 1, wherein the first indication information is used to indicate a parameter of the N sub-chirp signals, and the parameter of the N sub-chirp signals comprises at least one of the following: the time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, or a start frequency domain resource location and/or an end frequency domain resource location of each of the N sub-chirp signals.

6. The method according to claim 1, wherein the first indication information is used to indicate a first index, the first index corresponds to a first parameter, and the first parameter comprises at least one of the following: a value of N, a positive or negative sign of a slope of each of the N sub-chirp signals, a distribution range of a slope of each of the N sub-chirp signals, a quantity of time domain units for each of the N sub-chirp signals to last, a quantity of frequency domain units for each of the N sub-chirp signals to last, a start time domain resource location and/or an end time domain resource location of each of the N sub-chirp signals, and/or a start frequency domain resource location and/or an end frequency domain resource location of each of the N sub-chirp signals.

7. The method according to claim 6, wherein the first index is a plurality of first indexes, the plurality of first indexes are in a one-to-one correspondence with a plurality of first parameters, and each of the plurality of first parameters is a parameter of a chirp signal.

8. The method according to any one of claims 2 to 7, wherein a pattern of the first chirp signal corresponds to a second index, and the second index corresponds to a first sequence or a first codebook.

9. The method according to claim 8, wherein the second index is a plurality of second indexes, and the plurality of second indexes are in a one-to-one correspondence with a plurality of sequences or a plurality of codebooks.

10. The method according to claim 1, wherein the first indication information is used to indicate a pattern of the first chirp signal.

11. The method according to any one of claims 1 to 10, wherein the first indication information is carried in at least one of radio resource control configuration PC5 RRC-configuration signaling for a direct communication interface, resource pool preconfiguration signaling Resource pool preconfiguration, a media access control control element MAC CE, a layer 1 signal, or sidelink control information SCI, or
The first indication information is carried in at least one of radio resource control configuration RRC-configuration signaling or downlink control information DCI.

12. A communication method, comprising:
receiving first indication information, wherein the first indication information indicates a first chirp signal, the first chirp signal comprises N sub-chirp signals, N is a positive integer greater than or equal to 2, the N sub-chirp signals comprise a first sub-chirp signal and a second sub-chirp signal, parameters of the first sub-chirp signal and the second sub-chirp signal are different, and the parameter comprises at least one of the following: a start time domain resource, a start frequency domain resource, an end time domain resource location, an end frequency domain resource location, a slope, a quantity of consecutive time domain units, or a quantity of consecutive frequency domain units;
determining the first chirp signal based on the first indication information.

13. The method according to claim 12, wherein the first indication information is used to indicate a generator matrix of the first chirp signal, elements included in rows of the generator matrix of the first chirp signal respectively represent time domain resource locations of the N sub-chirp signals, elements included in columns of the generator matrix of the first chirp signal respectively represent frequency domain resource locations of the N sub-chirp signals; or elements included in rows of the generator matrix of the first chirp signal respectively represent frequency domain resource locations of the N sub-chirp signals, and elements included in columns of the generator matrix of the first chirp signal respectively represent time domain resource locations of the N sub-chirp signals.

14. The method according to claim 13, wherein the first indication information is used to indicate a dimension of a generation matrix of the first chirp signal;
the first indication information is further used to indicate at least one of the following: a location of a first element, a row of the generation matrix of the first chirp signal, or a column of the generation matrix of the first chirp signal, wherein a time domain resource and a frequency domain resource corresponding to the location of the first element are occupied by the sub-chirp signal.

15. The method according to claim 13 or 14, wherein the generation matrix of the first chirp signal is different from a generation matrix of a second chirp signal, and a receiving apparatus of the first chirp signal is different from a receiving apparatus of the second chirp signal.

16. The method according to claim 12, wherein the first indication information is used to indicate a parameter of the N sub-chirp signals, and the parameter of the N sub-chirp signals comprises at least one of the following: a time domain resource and/or a frequency domain resource of each of the N sub-chirp signals, a slope of each of the N sub-chirp signals, a quantity of consecutive time domain units of each of the N sub-chirp signals, a quantity of consecutive frequency domain units of each of the N sub-chirp signals, a start time domain resource location and/or an end time domain resource location of each of the N sub-chirp signals, or a start frequency domain resource location and/or an end frequency domain resource location of each of the N sub-chirp signals.

17. The method according to claim 12, wherein the first indication information is used to indicate a first index, the first index corresponds to a first parameter, and the first parameter comprises at least one of the following: a value of N, a positive or negative sign of a slope of each of the N sub-chirp signals, a distribution range of a slope of each of the N sub-chirp signals, a quantity of time domain units for each of the N sub-chirp signals to last, a quantity of frequency domain units for each of the N sub-chirp signals to last, a start time domain resource location and/or an end time domain resource location of each of the N sub-chirp signals, and/or a start frequency domain resource location and/or an end frequency domain resource location of each of the N sub-chirp signals.

18. The method according to claim 17, wherein the first index is a plurality of first indexes, the plurality of first indexes are in a one-to-one correspondence with a plurality of first parameters, and each of the plurality of first parameters is a parameter of a chirp signal.

19. The method according to any one of claims 13 to 18, wherein a pattern of the first chirp signal corresponds to a second index, and the second index corresponds to a first sequence or a first codebook.

20. The method according to claim 19, wherein the second index is a plurality of second indexes, and the plurality of second indexes are in a one-to-one correspondence with a plurality of sequences or a plurality of codebooks.

21. The method according to claim 12, wherein the first indication information is used to indicate a pattern of the first chirp signal.

22. The method according to any one of claims 12 to 21, wherein the first indication information is carried in at least one of a PC5 RRC-configuration, a resource pool preconfiguration, a MAC CE, a layer 1 signaling, or an SCI; or,
The first indication information is carried in at least one of RRC-configuration signaling or DCI.

23. A communication apparatus, comprising a module or unit configured to perform the method according to any one of claims 1 to 11.

24. A communication apparatus, comprising a module or unit configured to perform the method according to any one of claims 12 to 22.

25. A communication system, comprising the communication apparatus according to claim 23 and claim 24.

26. A computer-readable storage medium, wherein the computer-readable storage medium stores a computer program or instructions, and when the computer program or the instructions are run on a communication apparatus, the communication apparatus is enabled to perform the method according to any one of claims 1 to 11, or the method according to any one of claims 12 to 22.

27. A computer program product, wherein the computer program product comprises a computer program or instructions for performing the method according to any one of claims 1 to 11, or the method according to any one of claims 12 to 22.

28. A chip, wherein the chip comprises a processor and a communication interface, and the processor reads instructions stored in a memory through the communication interface to perform the method according to any one of claims 1 to 11, or the method according to any one of claims 12 to 22.
